(19) **Europäisches Patentamt / European Patent Office / Office européen des brevets**

(11) **EP 4 601 904 B1**

(12) **FASCICULE DE BREVET EUROPEEN**

(45) Date de publication et mention de la délivrance du brevet:
**22.07.2026 Bulletin 2026/30**

(21) Numéro de dépôt: **23783485.8**

(22) Date de dépôt: **11.09.2023**

(51) Classification Internationale des Brevets (IPC):
**B60L 3/12** *(2006.01)* **B60L 3/00** *(2019.01)*
**B60L 7/18** *(2006.01)* **B60L 58/13** *(2019.01)*
**G01R 31/3828** *(2019.01)* **H02P 29/02** *(2016.01)*
**H02P 29/024** *(2016.01)*

(52) Classification Coopérative des Brevets (CPC):
**B60L 3/12; B60L 3/0023; B60L 3/0046; B60L 7/18; B60L 58/13; H02P 29/024;** B60L 2240/423; B60L 2240/547; B60L 2240/549; B60L 2260/42

(86) Numéro de dépôt international:
**PCT/FR2023/051374**

(87) Numéro de publication internationale:
**WO 2024/079401 (18.04.2024 Gazette 2024/16)**

(54) **VÉHICULE AUTOMOBILE COMPRENANT UN SYSTÈME DE CONTRÔLE POUR CORRIGER LES PICS DE PUISSANCE EN RECHARGE PAR DÉCÉLERATION OU FREINAGE, SYSTÈME ET PROCÉDÉ POUR UN TEL VÉHICULE**

FAHRZEUG AUFWEISEND STEUERUNGSSYSTEM FÜR SPITZENLEISTUNGSKORREKTUR BEIM AUFLADEN DURCH VERZÖGERUNG ODER BREMSEN, SYSTEM UND VERFAHREN DAFÜR

VEHICLE COMPRISING CONTROL SYSTEM FOR PEAK POWER CORRECTION AT RECHARGE BY DECELERATION OR BRAKING, SYSTEM AND METHOD THEREFOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **12.10.2022 FR 2210458**

(43) Date de publication de la demande:
**20.08.2025 Bulletin 2025/34**

(73) Titulaire: **Stellantis Auto SAS**
**78300 Poissy (FR)**

(72) Inventeurs:
• **MOUSTAOULI, Ayoub**
**CASABLANCA, 20570 (MA)**
• **HABBANI, Ridouane**
**92600 ASNIERES SUR SEINE (FR)**
• **MICHAUT, Simon**
**95870 BEZONS (FR)**
• **BASTIANI, Philippe**
**78300 POISSY (FR)**
• **CINNERI, Patrice**
**95870 BEZONS (FR)**

(74) Mandataire: **PSIP**
**Stellantis Auto SAS**
**Service REIP - YT800**
**43, rue Jean Pierre Timbaud**
**78300 Poissy (FR)**

(56) Documents cités:
**EP-A1- 2 426 008** **WO-A1-2013/020212**
**FR-A1- 2 992 618** **JP-A- 2008 042 973**
**US-A1- 2015 171 640**

**Description**

L'invention se rapporte au domaine des architectures moteurs et systèmes de contrôle de moteur pour véhicule automobile de type électrique ou hybride.

Dans ce domaine, le contrôle de la machine électrique tient compte d'estimations ou de mesures pour les composants électriques coté haute tension (HV - 48V/400V ou 800V par exemple), sur la base desquelles le contrôle est effectué.

Malheureusement, ces estimations et mesures peuvent impliquer des erreurs de sorte que le contrôle est biaisé, et des pics de puissance peuvent intervenir notamment pendant les périodes de charge par récupération (décélération ou freinage). Dans ce cas, cela entraîne des décharges prématurées de la batterie de traction. Une décharge profonde entraîne des risques d'endommagement de la batterie et impacte sa durabilité. Par ailleurs, l'invention permet en plus de minimiser les émissions $CO_2$ en augmentant l'autonomie de la batterie de traction.

L'état de la technique est connu des documents EP 2 426 008 A1, WO 2013/020212 A1 et FR 2 992 618 A1.

Un objectif de la présente invention est de remédier aux défauts de l'art antérieur, et notamment de proposer une solution de contrôle de machine électrique limitant les pics de puissance et les décharges prématurées de la batterie de traction, notamment pendant les périodes de charge par récupération (décélération ou freinage).

Pour atteindre cet objectif, l'invention propose un véhicule automobile comprenant au moins une batterie de traction dans une chaîne de traction comportant au moins un dispositif électrique, au moins une machine électrique configurée pour recharger ladite batterie de traction lors du roulage du véhicule, le véhicule comprenant en outre un système de contrôle qui comprend :

- un moyen de calcul de puissance de compensation de la batterie pour calculer une valeur de puissance de compensation permettant de compenser des erreurs d'estimation ou de mesure, au moyen d'un régulateur proportionnel intégral ;
- un moyen de calcul de puissance de récupération pour calculer une valeur de puissance de récupération sur la base de la valeur de puissance de compensation ;
- un moyen de calcul de consigne de couple de récupération sur la base de la valeur de puissance de récupération.

Avantageusement, l'invention permet de compenser les erreurs d'estimation ou de mesure pour les composants électriques coté haute tension HV (48V/400V ou 800V par exemple) et les erreurs de réalisation des machines électriques pour les véhicules hybrides ou électriques afin d'éviter de décharger la batterie de traction dans des phases de charge (récupération : décélération /freinage)

Contrairement aux solutions de l'art antérieur, l'invention permet d'améliorer la robustesse de contrôle pour éviter de décharger la batterie suite aux différences coté haute tension (différences d'estimation, de mesure, de mise en œuvre de la machine électrique), ce qui permettra de minimiser les émissions $CO_2$ en augmentant l'autonomie de la batterie de traction.

Selon une variante, le système de contrôle est activé si une puissance nominale de la batterie et une limite de pic de puissance de la batterie sont supérieures à un premier seuil, et la puissance demandée par le véhicule est inférieure à un deuxième seuil.

Cela permet de détecter le plus possible de pics.

Selon l'invention, le moyen de calcul de puissance de compensation pour calculer une valeur de puissance de compensation met en œuvre les formules suivantes :

$$P_{ElLim} = \min\left(0\,;\, \max\left(\min\left(P_{ChPeak_{HVB}} + P_{PeakOfs}\,;\, P_{ChNom\,HVB}\right)\,;\, P_{DesEl}\right)\right)\,;$$

$$P_{Error} = P_{ElLim} - P_{HVB}\,;$$

$$P_{Corrected} = K_p * P_{Error} + K_i * \int P_{Error}\,dt\,;$$

avec

$P_{ElLim}$, une puissance électrique limite lors de la charge de la batterie ;
$P_{ChPeak_{HVB}}$, une puissance limite de pic en charge ;
$P_{ChNom_{HVB}}$, une puissance limite nominale en charge ;
$P_{PeakOfs}$, un décalage sécuritaire pour le pic de puissance de la batterie afin d'éviter de dépasser la limite de pic en charge de la batterie ;

$P_{DesEl}$, une puissance électrique maximale du véhicule ;

$P_{HVB}$, une puissance instantanée de la batterie ;

$P_{Corrected}$, la puissance de compensation ;

$P_{Error}$, une erreur entre la limitation de puissance électrique en charge et la puissance instantané de la batterie de traction ;

$K_p$, un coefficient proportionnel de la puissance instantanée de la batterie de traction ; et

$K_i$, un coefficient intégral de la puissance instantanée de la batterie de traction.

Cela permet de déterminer la puissance de compensation avec précision.

Selon une variante, le moyen de calcul de puissance de compensation utilise uniquement la partie intégrale, avec $K_i \neq 0$ et $K_p =$

Cela permet de compenser l'erreur statique entre la limitation de puissance électrique en charge et la puissance instantané de la batterie 48V/HV.

Selon une variante, le moyen de calcul de puissance de compensation détermine une puissance de compensation saturée entre deux valeurs limites maximale et minimale, telles qu'entre -800W et 0W.

Cela permet de ne pas dépasser les limitations de la batterie et prendre uniquement la somme des erreurs présentes coté chaîne de traction (erreurs de mesure, d'estimation ou de réalisation machine).

Selon une variante, le moyen de calcul de puissance de récupération met en œuvre la formule

$$P_{Alloc_{Pulse}}^{Recup} = P_{Corrected} + P_{Ch_{Pulse}\,HVB} - \sum_{i=0}^{N} P_{Inst}^i$$

avec

N, le nombre de dispositifs électriques de la chaîne de traction ;

$P_{Inst}^i$ , la puissance instantanée du dispositif électrique « i » de la chaîne de traction ;

$P_{Ch_{Pulse}\,HVB}$, la puissance limite d'une pulsation pendant une charge de la batterie, la pulsation étant un pic nominal stabilisé pendant au moins 2s, représentant ce que la batterie est capable de fournir durant un temps donné

Cela permet de déterminer la puissance de récupération avec précision.

L'invention porte en outre sur un système de contrôle pour un véhicule automobile selon l'invention, caractérisé en ce qu'il comprend :

- un moyen de calcul de puissance de compensation de la batterie pour calculer une valeur de puissance de compensation permettant de compenser des erreurs d'estimation ou de mesure , au moyen d'un régulateur proportionnel intégral ;
- un moyen de calcul de puissance de récupération pour calculer une valeur de puissance de récupération sur la base de la valeur de puissance de compensation ;
- un moyen de calcul de consigne de couple de récupération sur la base de la valeur de puissance de récupération

L'invention concerne en outre un procédé de contrôle pour un véhicule automobile selon l'invention, qui comprend :

- une étape de calcul de puissance de compensation de la batterie pour calculer une valeur de puissance de compensation permettant de compenser des erreurs d'estimation ou de mesure , au moyen d'un régulateur proportionnel intégral ;
- une étape de calcul de puissance de récupération pour calculer une valeur de puissance de récupération sur la base de la valeur de puissance de compensation ;
- une étape de calcul de consigne de couple de récupération sur la base de la valeur de puissance de récupération.

Un autre objet de l'invention concerne un programme d'ordinateur comprenant des instructions de code de programme pour l'exécution des étapes du procédé de contrôle selon l'invention, lorsque ledit programme fonctionne sur le système de contrôle (C). L'invention est définie par l'objet des revendications annexées.

L'invention sera davantage détaillée par la description de modes de réalisation non limitatifs, et sur la base des figures annexées illustrant des variantes de l'invention, dans lesquelles :

- [Fig.1] illustre schématiquement un procédé de contrôle selon un mode de réalisation préféré ; et
- [Fig.2] illustre schématiquement des évolutions dans le temps d'états de charge au-dessus ; et de puissances de batterie, de machine électrique et de dispositif électrique du véhicule.

L'invention propose un système de contrôle de moteur permettant de compenser les erreurs d'estimation ou de mesure pour les composants électriques coté haute tension (48V/400V ou 800V par exemple) et les erreurs de réalisation des machines électriques pour les véhicules hybrides ou électriques, afin d'éviter de décharger la batterie de traction dans des phases de charge (récupération : décélération/freinage).

Cette fonction a pour but de corriger le pic de puissance de récupération/régénération afin d'éviter de décharger la batterie de traction à 48V pendant la charge en compensant les erreurs des commandes et des composants électriques côté haute tension /48V.

La correction est assurée en comparant la puissance instantanée côté haute tension /48V et la puissance de charge maximale de la batterie à haute tension /48V à l'aide d'un régulateur PID R.

Aussi, cette stratégie peut désactiver la correction afin de ne pas dépasser la limite de puissance de la batterie HV/48V lorsqu'on dépasse la puissance charge maximale de la batterie.

L'intérêt technique est d'améliorer la robustesse de contrôle pour éviter de décharger la batterie suite aux différences coté haute tension dans les estimations, mesures, mises en œuvre de la machine électrique). Cela permet de minimiser les émissions $CO_2$ en augmentant l'autonomie de la batterie de traction.

L'invention se base sur les composants électriques suivants :

- une batterie à haute tension, par exemple à 48V ;
- des consommateurs électriques coté haute tension, par exemple un convertisseur DCDC qui permet d'alimenter un réseau de bord de véhicule, pouvant être à 12V ;
- au moins une machine électrique alimentée par ladite batterie qui peut être rechargée par cette machine électrique lors du roulage du véhicule.

La stratégie de contrôle se compose de trois parties :

- une activation A / désactivation D de la stratégie de compensation ;
- un calcul d'une valeur de puissance afin de compenser les erreurs ;
- un calcul de la puissance allouée à la récupération corrigée qui prend en compte la compensation d'erreur ; et la puissance charge limite de la batterie et la somme de puissance des auxiliaires électriques à 48V (par exemple : convertisseur DCDC, compresseur électrique HV). Ensuite, cette puissance va être utilisée afin de calculer la consigne de couple en récupération.

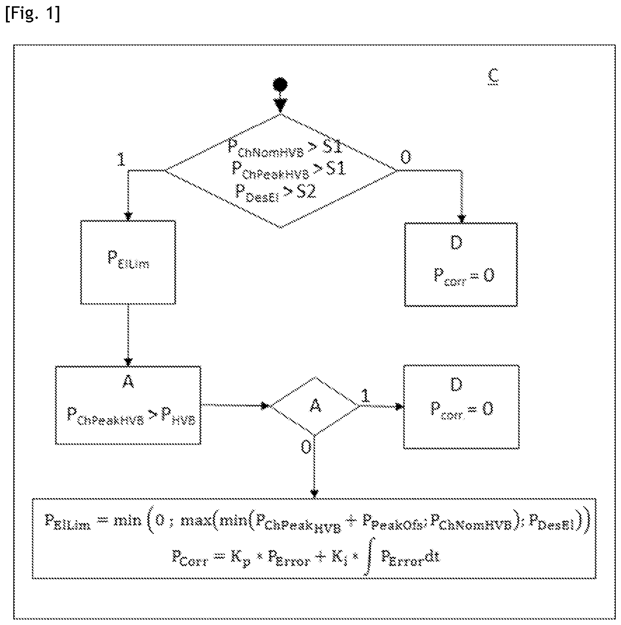

La stratégie est illustrée en figure 1.

Premièrement, on réalise une activation A / désactivation D de la stratégie de compensation : On active la stratégie de compensation de préférence si toutes les conditions suivantes sont réalisées :

- le système électrique à haute tension (48V/HV) est activé, c'est-à-dire que les contacteurs de la batterie sont fermés et les composants côté haute tension sont activés (par exemple le convertisseur DCDC est en mode conversion (mode buck) ;
- la puissance nominale et une limite de pic de la batterie (avec en convention un signe négatif pour la charge et un signe positif pour la décharge) sont, chacun, supérieur en valeur absolue à un seuil calibrable spécifique (hystérésis).

La puissance électrique demandée par le véhicule (puissance électrique que l'on souhaite réaliser absolument) est inférieure à un seuil calibrable (hystérésis).

On désactive la stratégie de compensation si l'une des conditions suivantes est réalisée :

- le système électrique à haute tension 48V/HV est désactivé, par exemple parce que les contacteurs de la batterie de traction 48V/HV sont ouverts ;
- la puissance nominale et la limite de pic de la batterie sont inférieurs en valeur absolue audit un seuil calibrable (hystérésis) ;
- la puissance électrique demandée par le véhicule est supérieure à un seuil calibrable (hystérésis) durant une temporisation.

Deuxièmement, on réalise un calcul d'une valeur de puissance afin de compenser les erreurs :

- si la stratégie de compensation est désactivée alors la puissance compensée est 0W : P_{Corrected} = 0*W*;
- si la stratégie de compensation est activée alors la puissance compense sera calculée comme détaillé plus bas.

Il s'agit d'un régulateur de type proportionnel intégral (ou PI) qui permettra de corriger les erreurs cumulées au niveau de la chaîne de traction (erreurs d'estimation, de mesure ou de réalisation) entre une puissance électrique limite de charge $P_{ElLim}$, et une puissance instantanée de la batterie de traction $P_{HVB}$.

La puissance électrique limite de charge $P_{ElLim}$, est calculée via la formule suivante :

$$ P_{ElLim} = \min\left(0\,;\, \max\left(\min\left(P_{ChPeak_{HVB}} + P_{PeakOfs}\,;\, P_{ChNom_{HVB}}\right); P_{DesEl}\right)\right) ; $$

avec

$P_{ChPeak_{HVB}}$, une puissance limite de pic en charge : elle peut être :

- la puissance limite de pic de charge envoyée par la batterie de traction 48V/HV ; ou
- une résultante de limitation de puissance régulée qui sera calculée via une régulation intégrale dérivée (PID) qui doit de préférence respecter la puissance limite de pic de batterie, en comparant cette puissance limite de pic de la batterie de traction 48V/HV à la puissance consommée ou fournie par la batterie (puissance instantanée de la batterie) ; le régulateur doit de préférence s'assurer de respecter la puissance limite et de ne pas la dépasser durant un temps de réponse maximal (par exemple 150ms), pour éviter le risque d'ouverture des contacteurs batterie 48V/HV ;

$P_{ChNom_{HVB}}$, une puissance limite nominale en charge : elle peut être :

- la puissance limite charge de nominale envoyée par la batterie de traction 48V/HV ; ou
- une résultante de limitation de puissance régulée qui sera calculée via un PID qui doit de préférence respecter la puissance limite de la batterie en nominal, en comparant cette puissance limite nominale de la batterie de traction 48V/HV à la puissance consommée ou fournie par la batterie (puissance instantanée de la batterie) ; le régulateur doit de préférence s'assurer de respecter la puissance limite et de ne pas la dépasser durant un temps de réponse maximal (par exemple 150ms), pour éviter le risque d'ouverture des contacteurs batterie 48V/HV ;

$P_{PeakOfs}$, un décalage sécuritaire pour le pic de puissance de la batterie afin d'éviter de dépasser la limite de pic en charge de la batterie de traction ;
$P_{DesEl}$, une puissance électrique maximale du véhicule : lorsque cette puissance est positive, elle permet de définir une puissance électrique exploitable par le système électrique ; lorsqu'elle est négative, il s'agit de la puissance électrique que l'on souhaite réaliser absolument.

Le correcteur PI sera calculée via l'équation suivante :

$$ P_{Corrected} = K_p * P_{Error} + K_i * \int P_{Error} dt ; $$

$$ P_{Error} = P_{ElLim} - P_{HVB} ; $$

avec

$P_{Corrected}$, la puissance de compensation ;
$P_{Error}$, une erreur entre la limitation de puissance électrique en charge et la puissance instantané de la batterie de traction ;
$K_p$, traction ; et
$K_i$, un coefficient intégral de la puissance instantanée de la batterie de traction.

Dans la stratégie on activera uniquement la partie intégrale ($K_i \neq 0$ et $K_p = 0$) afin de compenser l'erreur statique entre la limitation de puissance électrique en charge et la puissance instantané de la batterie 48V/HV.

La correction sera saturée entre deux valeurs limites maximale et minimale par exemple entre : [-800W, 0W] afin de ne pas dépasser les limitations de la batterie et prendre uniquement la somme des erreurs présentes coté chaîne de traction (erreurs de mesure, d'estimation ou de réalisation machine).

Les coefficients du régulateur PI seront calibrés avec une dynamique lente afin de :

- évitez de dépasser la limite de puissance de la batterie HV/48V ; et
- éviter les oscillations dues au fonctionnement en parallèle de deux régulateurs (régulateur de limitation de puissance et correcteur de compensation d'erreur).

Le régulateur PI sera relancé ($P_{Corr}$ = 0$W$) suite au fait que les deux conditions suivantes sont vraies :

- la puissance instantanée de la batterie 48V/HV dépasse la puissance limite de pic en charge de la batterie $P_{ChPeak_{HVB}}$ par k% ($k_1$ * $P_{ChPeak_{HVB}}$ > $P_{HVB}$) durant un temps calibrable ;
- en calibration d'activation de la stratégie (calibrée par défaut en désactivation donc relance par le régulateur PI).

Troisièmement, on réalise un calcul de la puissance allouée à la récupération corrigée qui prend en compte la compensation d'erreur et un calcul de la consigne de couple en utilisant la puissance allouée à la récupération corrigée.

La puissance allouée à la récupération permet de calculer la puissance demandée coté véhicule en charge en prenant en compte la puissance limite (en pic nominal stabilisé et continu) en charge de la batterie 48V/HV et la demande de puissance de toute les consommateurs électriques coté 48V/HV.

Ainsi, la puissance allouée à la récupération sera égale à :

$$P_{Alloc_{Pulse}}^{Recup}$$

$$= \begin{cases} P_{Ch_{Pulse}\,HVB} - \sum_{i=0}^{N} P_{Inst}^{i} \; ; Si\ Systéme\ electrique\ est\ active\ (Contacteurs\ batterie\ fermés) \\ 0 \; ; Sinon \end{cases}$$

avec :

N, le nombre de dispositifs électriques de la chaîne de traction ;

$P_{Inst}^{i}$ , la puissance instantanée du dispositif électrique « i » de la chaîne de traction ;

$P_{Ch_{Pulse}\,HVB}$ , la puissance limite d'une pulsation pendant une charge de la batterie, la pulsation étant un pic nominal stabilisé pendant au moins 2s, représentant ce que la batterie est capable de fournir durant un temps donné.

En ajoutant la compensation des erreurs ($P_{Corr}$) à la puissance allouée en récupération, alors le nouveau calcul de la puissance allouée à la récupération sera égale à :

$$P_{Alloc_{Pulse}}^{Recup}$$

$$= \begin{cases} P_{Corrected} + P_{Ch_{Pulse}\,HVB} - \sum_{i=0}^{N} P_{Inst}^{i} \; ; Si\ Systéme\ electrique\ est\ active \\ 0 \; ; Sinon \end{cases}$$

Cette nouvelle allocation en puissance en récupération est utilisée pour calculer la limitation de couple disponible des machines électriques.

Cette nouvelle allocation en puissance en récupération $P_{Alloc_{Pulse}}^{Recup}$ est égale à la somme de :

- la puissance de compensation ;
- la puissance charge maximale de la batterie ;
- les puissances des dispositifs électriques côté haute tension / 48V (par exemple : le convertisseur DCDC, compresseur électrique HV).

Ensuite, cette nouvelle puissance allouée va être utilisée afin de calculer la consigne de couple à demander à la machine (en mode générateur) pour alimenter les dispositifs auxiliaires et charger la batterie 48V/HV.

Ces allocations de puissance et limitations de couple doivent être respectées par les différentes strates du véhicule.

Donc la consigne de couple de la machine électrique se base sur la limitation de couple disponible des machines électriques.

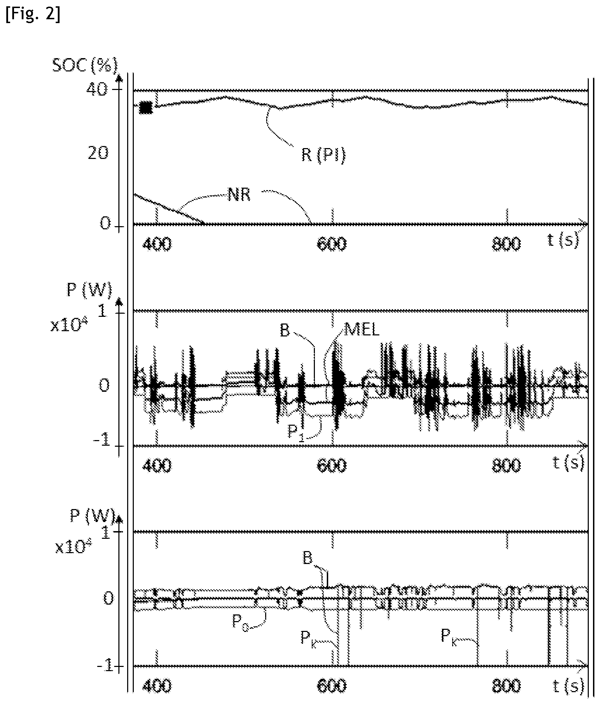

Afin de valider la stratégie, on a déroulé un cycle de fonctionnement à une température à -30°C et à un état de charge initial de la batterie à 30% ; ce cas d'usage permet d'avoir une puissance limite en charge nulle de la batterie. Ainsi, en prenant en compte les erreurs coté chaîne de traction, on risque de décharger la batterie de traction 48V/HV ; en effet, afin de compenser ses erreurs, la batterie fournira le delta de puissance. Et on voit bien dans le graphe en haut de la figure 2 qu'on décharge complétement la batterie sans stratégie de compensation (graphe de l'état de charge SOC sans régulation après 7min), la référence NR désignant l'essai sans régulation, et R (PI) désignant la régulation PI. La référence Pk désigne les pics de décharge, et les références P1 et P0 désignent respectivement la puissance appliquée avec et sans la régulation. La référence MEL désigne la puissance de la machine électrique. La référence B désigne la puissance de la batterie générant les pics Pk.

Par contre, lorsqu'on active la stratégie de compensation des erreurs de puissance on arrive maintenir un état de charge SOC stable durant tout le cycle suite à la compensation des erreurs coté chaîne de traction (graphe de l'état de charge SOC avec régulation).

Dans un mode réalisation alternatif, on peut avoir un correcteur de compensation d'erreur pour chaque limitation de puissance de pulsation en charge de la batterie 48V/HV. Dans ce cas, la puissance allouée en récupération est égale à :

$$P^{Recup}_{Alloc_{Pulse}}$$

$$= \begin{cases} P_{Corrected_{Pulse}} + P_{Ch_{Pulse\,HVB}} - \sum_{i=0}^{N} P^i_{Inst} \; ; Si\ Systéme\ electrique\ est\ active \\ 0 \; ; Sinon \end{cases}$$

L'invention porte en outre sur un procédé de contrôle et un programme de contrôle correspondants. Le procédé et le programme correspondants peuvent être mis en œuvre dans un système de contrôle de type ordinateur.

## Revendications

1. Véhicule automobile comprenant au moins une batterie de traction dans une chaîne de traction comportant au moins un dispositif électrique, au moins une machine électrique configurée pour recharger ladite batterie de traction lors du roulage du véhicule, le véhicule comprenant en outre un système de contrôle (C) qui comprend :

   - un moyen de calcul de puissance de compensation de la batterie pour calculer une valeur de puissance de compensation ($P_{Corr}$) permettant de compenser des erreurs d'estimation ou de mesure, au moyen d'un régulateur proportionnel intégral, les erreurs d'estimation ou de mesure étant des erreurs cumulées au niveau de la chaîne de traction entre une puissance électrique limite de charge $P_{ElLim}$ et une puissance instantanée de la batterie de traction $P_{HVB}$ ;
   - un moyen de calcul de puissance de récupération pour calculer une valeur de puissance de récupération sur la base de la valeur de puissance de compensation ;
   - un moyen de calcul de consigne de couple de récupération sur la base de la valeur de puissance de récupération, le véhicule **caractérisé en ce que** le moyen de calcul de puissance de compensation pour calculer une valeur de puissance de compensation met en œuvre les formules suivantes :

$$P_{ElLim} = \min\left(0 \; ; \; \max\left(\min\left(P_{ChPeak_{HVB}} + P_{PeakOfs} ; P_{ChNom\,HVB}\right) ; P_{DesEl}\right)\right) \; ;$$

$$P_{Error} = P_{ElLim} - P_{HVB} \; ;$$

$$P_{Corr} = K_p * P_{Error} + K_i * \int P_{Error} dt \ ;$$

avec

$P_{ElLim}$, une puissance électrique limite lors de la charge de la batterie ;

$P_{ChPeakHVB}$, une puissance limite de pic en charge ;

$P_{ChNomHVB}$, une puissance limite nominale en charge ;

$P_{PeakOfs}$, un décalage sécuritaire pour le pic de puissance de la batterie afin d'éviter de dépasser la limite de pic en charge de la batterie ;

$P_{DesEl}$, une puissance électrique maximale du véhicule ;

$P_{HVB}$, une puissance instantanée de la batterie ;

$P_{Corr}$, la puissance de compensation ;

$P_{Error}$, une erreur entre la limitation de puissance électrique en charge et la puissance instantané de la batterie de traction ;

$K_p$, un coefficient proportionnel de la puissance instantanée de la batterie de traction ; et

$K_i$, un coefficient intégral de la puissance instantanée de la batterie de traction.

2. Véhicule automobile selon la revendication 1, **caractérisé en ce que** le système de contrôle est activé (A) si une puissance nominale ($P_{ChNomHVB}$) de la batterie et une limite de pic de puissance ($P_{ChPeakHVB}$) de la batterie sont supérieures à un premier seuil (S1), et la puissance demandée par le véhicule ($P_{DesEl}$) est inférieure à un deuxième seuil (S2).

3. Véhicule automobile selon la revendication 1 ou 2, **caractérisé en ce que** le moyen de calcul de puissance de compensation utilise uniquement la partie intégrale, avec $K_i \neq 0$ et $K_p = 0$.

4. Véhicule automobile selon la revendication 3, **caractérisé en ce que** le moyen de calcul de puissance de compensation détermine une puissance de compensation ($P_{Corr}$) saturée entre deux valeurs limites maximale et minimale, telles qu'entre -800W et 0W.

5. Véhicule automobile selon l'une quelconque des revendications 1 à 4, **caractérisé en ce que** le moyen de calcul de puissance de récupération met en œuvre la formule

$$P^{Recup}_{Alloc_{Pulse}} = P_{Corr} + P_{Ch_{Pulse} HVB} - \sum_{i=0}^{N} P^i_{Inst}$$

avec

N, le nombre de dispositifs électriques de la chaîne de traction ;

$P^i_{Inst}$ , la puissance instantanée du dispositif électrique « i » de la chaîne de traction ;

$P_{Ch_{Pulse} HVB}$ , la puissance limite d'une pulsation pendant une charge de la batterie, la pulsation étant un pic nominal stabilisé pendant au moins 2s, représentant ce que la batterie est capable de fournir durant un temps donné.

6. Système de contrôle (C) pour un véhicule automobile selon l'une quelconque des revendications 1 à 5, ledit système comprend:

- un moyen de calcul de puissance de compensation de la batterie pour calculer une valeur de puissance de compensation ($P_{Corr}$) permettant de compenser des erreurs d'estimation ou de mesure , au moyen d'un régulateur proportionnel intégral, les erreurs d'estimation ou de mesure étant des erreurs cumulées au niveau de la chaîne de traction entre une puissance électrique limite de charge $P_{ElLim}$ et une puissance instantanée de la batterie de traction $P_{HVB}$ ;

- un moyen de calcul de puissance de récupération pour calculer une valeur de puissance de récupération sur la base de la valeur de puissance de compensation ;

- ledit système **caractérisé en ce qu'**il comprend un moyen de calcul de consigne de couple de récupération sur la base de la valeur de puissance de récupération selon la revendication 1.

7. Procédé de contrôle pour un véhicule automobile selon l'une quelconque des revendications 1 à 5, ledit procédé comprend :

- une étape de calcul de puissance de compensation de la batterie pour calculer une valeur de puissance de compensation permettant de compenser des erreurs d'estimation ou de mesure , au moyen d'un régulateur proportionnel intégral, les erreurs d'estimation ou de mesure pouvant être des erreurs cumulées au niveau de la chaîne de traction entre une puissance électrique limite de charge $P_{ElLim}$ et une puissance instantanée de la batterie de traction $P_{HVB}$ ;
- une étape de calcul de puissance de récupération pour calculer une valeur de puissance de récupération sur la base de la valeur de puissance de compensation ;
- ledit procédé **caractérisé en ce qu'**il comprend en outre:
une étape de calcul de consigne de couple de récupération sur la base de la valeur de puissance de récupération selon la revendication 1.

8. Programme d'ordinateur comprenant des instructions de code de programme pour l'exécution des étapes du procédé de contrôle selon la revendication 7, lorsque ledit programme fonctionne sur un système de contrôle (C) selon la revendication 6.

**Patentansprüche**

1. Kraftfahrzeug mit mindestens einer Antriebsbatterie in einem Antriebsstrang mit mindestens einer elektrischen Vorrichtung, mit mindestens einer elektrischen Maschine, die so konfiguriert ist, dass sie die Antriebsbatterie beim Rollen des Fahrzeugs auflädt, wobei

das Fahrzeug ferner ein Steuersystem (C) aufweist, das aufweist:

- ein Batteriekompensationsleistungsberechnungsmittel zum Berechnen eines Kompensationsleistungswertes ($_{PCorr}$) zum Kompensieren von Schätzungs- oder Messfehlern mittels eines integralen Proportionalreglers, wobei die Schätzungs- oder Messfehler kumulative Fehler in dem Antriebsstrang zwischen einer elektrischen Lastgrenzleistung $P_{ElLim}$ und einer Leistung sind Antriebsbatteriemomentaufnahme $P_{HVB}$;
- eine Rückgewinnungsleistungsberechnungseinrichtung zum Berechnen eines Rückgewinnungsleistungswerts auf der Grundlage des Kompensationsleistungswerts;
- eine Rückgewinnungsdrehmoment-Sollberechnungseinrichtung auf der Grundlage des Rückgewinnungsleistungswerts,

das Fahrzeug **dadurch gekennzeichnet, dass** die Kompensationsleistungsberechnungseinrichtung zum Berechnen eines Kompensationsleistungswerts die folgenden Formeln verwendet:

$$P_{ElLim} = \min\left(0 \; ; \; \max\!\left(\min\!\left(P_{ChPeak_{HVB}} + P_{PeakOfs}; P_{ChNomHVB}\right); P_{DesEl}\right)\right) \; ;$$

$$P_{Error} = P_{ElLim} - P_{HVB} \; ;$$

$$P_{Corr} = K_p * P_{Error} + K_i * \int P_{Error}dt;$$

mit

$P_{ElLim}$, eine begrenzte elektrische Leistung beim Laden der Batterie;
$P_{ChPeak\_HVB}$, eine Spitzenlastgrenzleistung;
$P_{ChName\_HVB}$, eine Nennleistungsgrenze im beladenen Zustand;
$P_{PeakOfs}$, eine sichere Verschiebung der Batteriespitzenleistung, um zu vermeiden, dass die maximale Akkuladung überschritten wird;

$P_{DesEl}$, die maximale elektrische Leistung des Fahrzeugs;

$P_{HVB}$, eine Momentanleistung der Batterie;

$P_{Corr}$, die Kompensationsleistung;

$P_{Error}$, ein Fehler zwischen der Begrenzung der elektrischen Leistung unter Last und der momentanen Leistung der Antriebsbatterie;

$K_p$, ein proportionaler Koeffizient der momentanen Leistung der Antriebsbatte rie; und

$K_i$ ;zusammenmit einer elektrischen Grenzleistung beim Laden der Batterie ; Batterieleistung zur Vermeidung des Überschreitens der Spitzenlastgrenze der Batterie; - die maximale elektrische Leistung des Fahrzeugs; - die momentane Batterieleistung; - die Kompensationsleistung; - ein Fehler zwischen der Begrenzung der elektrischen Leistung im Ladezustand und der momentanen Leistung der Antriebsbatterie; - ein proportionaler Koeffizient der momentanen Leistung der Antriebsbatterie; und - ein Integralkoeffizient der momentanen Leistung der Antriebsbatterie.

2. Kraftfahrzeug nach Anspruch 1, **dadurch gekennzeichnet, dass** das Kontrollsystem aktiviert wird (A), wenn eine Nennleistung ($_{PChNameHVB}$) der Batterie und eine Leistungsspitzengrenze ($_{PChPeakHVB}$) der Batterie größer als ein erster Schwellenwert (S1) sind, und die vom Fahrzeug ($_{PDesEl}$) geforderte Leistung kleiner als ein zweiter Schwellenwert (S2) ist.

3. Kraftfahrzeug nach Anspruch 1 oder 2, **dadurch gekennzeichnet, dass** das Kompensationsleistungsberechnungsmittel nur den integralen Teil mit $K_i \neq 0$ et $K_p = 0$verwendet.

4. Kraftfahrzeug nach Anspruch 3, **dadurch gekennzeichnet, dass** das Kompensationsleistungsberechnungsmittel eine Kompensationsleistung ($_{PCorr}$) bestimmt, die zwischen zwei maximalen und minimalen Grenzwerten, wie etwa zwischen -800W und 0W, gesättigt ist.

5. Kraftfahrzeug nach einem der Ansprüche 1 bis 4, **dadurch gekennzeichnet, dass** die Rückgewinnungsleistungsberechnungseinrichtung die Formel

$$P_{Alloc_{Pulse}}^{Recup} = P_{Corr} + P_{Ch_{Pulse\,HVB}} - \sum_{i=0}^{N} P_{Inst}^i$$

mitN, der Anzahl der elektrischen Vorrichtungen des Antriebsstrangs;

der momentanen Leistung der elektrischen Vorrichtung "i" des Antriebsstrangs;

$P_{Ch_{Pulse\,HVB}}$ der Grenzleistung eines Pulses während einer Batterieladung verwendet, wobei der Puls ein nomineller Peak ist, der für mindestens 2 Sekunden stabilisiert ist und das darstellt, was die Batterie während einer gegebenen Zeit liefern kann.

6. Steuersystem (C) für ein Kraftfahrzeug nach einem der Ansprüche 1 bis 5, wobei das System umfasst:

- Batteriekompensationsleistungsberechnungsmittel zum Berechnen eines Kompensationsleistungswertes ($_{PCorr}$) zum Kompensieren von Schätzungs- oder Messfehlern mittels eines integralen Proportionalreglers, wobei die Schätzungs- oder Messfehler akkumulierte Fehler in dem Antriebsstrang zwischen einer elektrischen Ladungsgrenzleistung $P_{ElLim}$ und einer momentanen Antriebsbatterieleistung sind $P_{HVB}$;
- Wiedergewinnungsleistungsberechnungsmittel zum Berechnen eines Wiedergewinnungsleistungswertes auf der Grundlage des Leistungswertes Kompensation;
- das System **dadurch gekennzeichnet ist, dass** es eine Einrichtung zur Berechnung des Wiedergewinnungsdrehmomentsollwerts auf der Grundlage des Wiedergewinnungsleistungswerts nach Anspruch 1 umfasst.

7. Steuerverfahren für ein Kraftfahrzeug nach einem der Ansprüche 1 bis 5, wobei das Verfahren umfasst:

- einen Batteriekompensationsleistungsberechnungsschritt zum Berechnen eines Kompensationsleistungswertes zum Kompensieren von Schätzungs- oder Messfehlern mittels eines integralen Proportionalreglers, wobei die Schätzungs- oder Messfehler akkumulierte Fehler in der Antriebskette zwischen einer elektrischen Ladungsgrenzleistung $P_{ElLim}$ und einer momentanen Antriebsbatterieleistung sein können $P_{HVB}$;
- einen Wiedergewinnungsleistungsberechnungsschritt zum Berechnen eines Wiedergewinnungsleistungswertes auf der Grundlage des Kompensationsleistungswertes;
- das Verfahren **dadurch gekennzeichnet, dass** es umfasst Zusätzlich: einen Schritt des Berechnens eines Wiedergewinnungsdrehmoment-Sollwerts auf der Grundlage des Wiedergewinnungsleistungswerts nach Anspruch 1.

**8.** Computerprogramm, das Programmcodeanweisungen zum Ausführen der Schritte des Steuerungsverfahrens nach Anspruch 7 umfasst, wenn das Programm auf einem Steuerungssystem (C) nach Anspruch 6 arbeitet.

## Claims

**1.** Motor vehicle comprising at least one traction battery in a traction system comprising at least one electrical device, at least one electrical machine configured to recharge said traction battery while the vehicle is driving,

the vehicle further comprising a control system (C) which comprises:

- a battery compensation power compute means for calculating a compensation power value ($P_{Corr}$) making it possible to compensate for estimation or measurement errors, by means of an integral proportional regulator, the estimation or measurement errors being cumulative errors at the level of the traction system between a maximum electric charge power $P_{ElLim}$ and an instantaneous power of the traction battery $P_{HVB}$;
- a recovery power compute means for calculating a recovery power value on the basis of the compensation power value;
- a recovery torque setpoint compute means on the basis of the recovery power value,

wherein the compensation power compute means for calculating a compensation power value implements the formulae:

$$P_{ElLim} = \min\left(0\ ;\ \max\left(\min\left(P_{ChPeak_{HVB}} + P_{PeakOfs}; P_{ChNom_{HVB}}\right); P_{DesEl}\right)\right)\ ;$$

$$P_{Error} = P_{ElLim} - P_{HVB}\ ;$$

$$P_{Corr} = K_p * P_{Error} + K_i * \int P_{Error}dt$$

$P_{ElLim}$, a limited electrical power when charging the battery;
$P_{ChPeak}]\_HVB$, a peak-to-load boundary power;
$P_{ChName}]\_HVB$, a rated power limit in load;
$P_{PeakOfs}$, a safe offset for peak battery power to avoid exceeding the peak battery ch arge limit;
$P_{DesEl}$, a maximum electrical power of the vehicle;
$P_{HVB}$, an instantaneous battery power;
$P_{Corr}$, the compensation power;
$P_{Error}$, an error between the electric power limitation in load and the instantaneous power of the traction battery;
$K_p$, a coefficient proportional to the instantaneous power of the traction battery; an d
$K_i$, an integral coefficient of the instantaneous power of the traction battery

**2.** A motor vehicle according to claim 1, wherein the control system is activated if a nominal power ($P_{ChNomHVB}$) of the battery and a peak power ($P_{ChPeakHVB}$) of the battery are greater than a first threshold (S1), and the power ordered by the motor vehicle ($P_{DesEl}$) is less than a second threshold (S2).

**3.** Motor vehicle according to claim 1 or 2, wherein the compensating power compute means uses only the integral part, with $K_i \neq 0$ et $K_p = 0$.

**4.** Motor vehicle as claimed in claim 3, wherein the compensation power compute means determines a compensation power ($P_{Corr}$) saturated between two maximum and minimum limit values, such as between -800 W and 0 W.

5. Motor vehicle according to any one of Claims 1 to 4, **characterized in that** the means for compute of recovery power implements the formula

$$P_{Alloc_{Pulse}}^{Recup} = \mathrm{P_{Corr}} + \mathrm{P_{Ch_{Pulse\,HVB}}} - \sum_{i=0}^{N} P_{Inst}^{i}$$

withN, the quantity of electrical devices of the traction chain;

, the instantaneous power of the electrical device « i » of the traction chain; $\mathrm{P_{Ch_{Pulse\,HVB}}}$, the power limit of a pulse during a charge of the battery, the pulse being a nominal peak stabilized for at least 2 s, representing what the battery is capable of delivering during a given time.

6. Control system (C) for a motor vehicle according to any one of claims 1 to 5, said system comprises:

   - a means for compute the compensation power of the battery to calculate a compensation power value ($_{PCorr}$) making it possible to compensate for estimation or measurement errors, by means of an integral proportional regulator, the estimation or measurement errors being cumulative errors at the level of the power train between a maximum electric charging power $P_{ElLim}$ and an instantaneous power of the traction battery $P_{HVB}$;
   - a means for compute the recovery power to calculate a recovery power value on the basis of the compensation power value;
   - said system comprising a means for compute the recovery torque setpoint on the basis of the recovery power value according to claim 1.

7. Control method for a motor vehicle according to any one of Claims 1 to 5, said method comprises:

   - a step of compute of compensation power of the battery to calculate a compensation power value for compensating estimation or measurement errors, by means of an integral proportional regulator, the estimation or measurement errors possibly being cumulative errors at the level of the power train between a maximum electric charging power $P_{ElLim}$ and an instantaneous power of the traction battery $P_{HVB}$;
   - a step of compute of recovery power to calculate a recovery power value on the basis of the compensation power value;
   - said method further comprising: a step of compute of recovery torque setpoint on the basis of the recovery power value according to Claim 1.

8. Computer plan comprising plan code instructions for executing the steps of the control method according to claim 7, when said plan operates on a control system according to claim 6.

[Fig. 1]

[Fig. 2]

**EP 4 601 904 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2426008 A1
- WO 2013020212 A1
- FR 2992618 A1